# EUROPEAN PATENT APPLICATION

(11) **EP 2 660 574 A1**
(43) Date of publication of application: **06.11.2013**
(21) Application number: 13158380.9
(22) Date of filing: 08.03.2013
(51) Int. Cl.: G01J 5/00, G01J 5/08, G01J 1/08, G01J 5/52

(54) **Flat light emitting plate for simulating thermal radiation, method for calibrating a pyrometer and method for determining the temperature of a semiconducting wafer**

(30) Priority: 04.05.2012 DE 102012008738
(71) Applicant: LayTec AG, 10709 Berlin (DE)
(72) Inventor: Zettler, Jörg-Thomas, 12587 Berlin (DE); Kaspari, Christian, 12247 Berlin (DE)
(74) Representative: Gulde Hengelhaupt Ziebig & Schneider

(57) **Abstract**

The present invention relates to a flat light emitting plate, a method for calibrating a pyrometer and a method for determining the temperature of a semiconducting wafer inside a processing chamber by said pyrometer.

It is an object of the present invention to provide a method for calibrating a pyrometer by means of a cold source which is also applicable to processing chambers with a narrow slit.

According to the present invention, a flat light emitting plate for simulating thermal radiation is provided, comprising a main body made of a transparent material, a light emission area located on an upper surface of the light emitting plate for emitting light, at least one light source located on a lateral surface of the light emitting plate, at least one detector located on a lateral surface of the light emitting plate, and a regulating circuit for adjusting the intensity of light emitted by the light sources.

## Description

### BACKGROUND OF THE INVENTION

### 1. Field of the Invention

The present invention relates to a flat light emitting plate, a method for calibrating a pyrometer and a method for determining the temperature of a semiconducting wafer inside a processing chamber by said pyrometer.

### 2. Description of Related Art

Measurements of the temperature of a semiconducting wafer belong to the most important tools during quality control in the semiconductor production.

In many applications, the semiconductor production is realised within a processing chamber and the temperature of the semiconducting wafer which is processed inside the processing chamber is measured by use of a pyrometer which is adapted to intercept and measure the thermal radiation emitted by the semiconducting wafer without contacting the wafer. Said thermal radiation is then used to calculate the temperature of the semiconducting wafer. Due to the high temperatures inside the processing chamber, the pyrometer is advantageously located outside the processing chamber and said thermal radiation passes through a window of the processing chamber before entering the pyrometer.

However, the geometry inside the processing chamber may change for different applications, for example due to different sizes or positions of semiconducting wafers inside the chamber. Such different geometrical parameters may result in different outcoupling characteristics of the thermal radiation from the semiconducting wafer to the pyrometer through the window of the processing chamber. Also, the optical transmission characteristics of the window of the processing chamber itself may change, for example due to process related window coating. Such optical transmission characteristics may also result in different outcoupling characteristics of thermal radiation from the semiconducting wafer to the pyrometer through the window of the processing chamber. A variation of the outcoupling characteristics may however severely affect the accuracy of the determination of the temperature of the semiconducting wafer. Therefore it is necessary to re-calibrate the pyrometer before starting the temperature measurement, even if it has been carefully pre-calibrated on a separate calibration stage (i.e., a black-body reference light source) before.

It is therefore advantageous to realise the calibration process prior to the manufacturing process. For instance in EP 2 251 658 B1 a pyrometer is calibrated by providing a calibration sample inside the processing chamber. The calibration sample is a sample which preferably corresponds to a semiconducting wafer in terms of size and material, where said semiconducting wafer is intended to be manufactured after the calibration process. The calibration process comprises heating the sample and irradiating the sample with two light beams at two different wavelengths. The temperature of the calibration sample is then determined from the ratio of the first reflectance and the second reflectance and the pyrometer is calibrated by assigning the determined temperature of the calibration sample with the thermal radiation signal measured by the pyrometer.

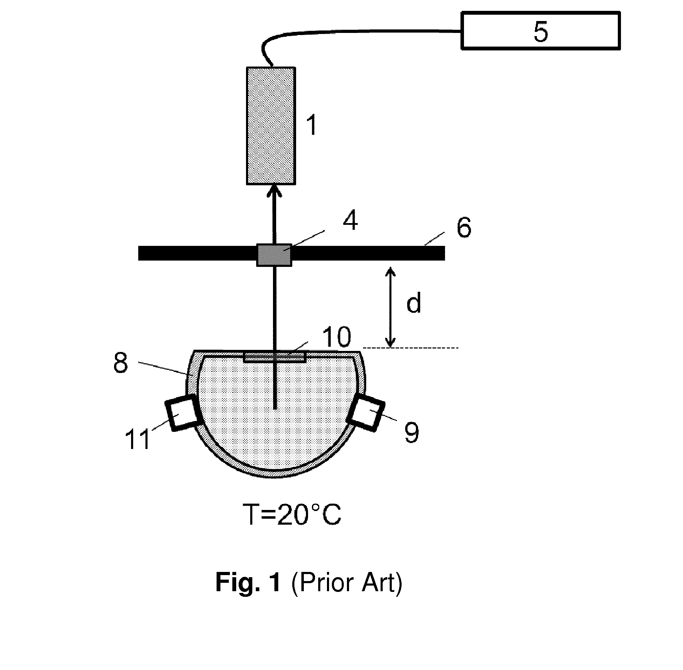

EP 2 365 307 A1 discloses a method of calibrating a pyrometer by means of a "cold source", which simulates the thermal radiation emitted by a semiconductor wafer. Fig. 1 shows the according calibration method of the prior art, where the "cold source" is provided by an integrating sphere 8 located inside the processing chamber 6 in such a manner that the opening 10 of the integrating sphere 8 corresponds with the surface area of the semiconducting wafer both in position and size and the emission of the integrating sphere is adjusted to be identical with the thermal radiation of a "hot" wafer at a predetermined temperature. This method can be repeatedly used to re-calibrate the pyrometer during the manufacturing process so that the accuracy of the pyrometer is increased.

However, in some types of processing chambers the semiconducting wafer to be processed is inserted inside the chamber by means of a wafer carrier through a narrow slit located on the side of the chamber. Since the slit has a typical width between 15 mm and 25 mm, it is too small to insert an integrating sphere, which usually has a diameter larger than 50 mm, so that the method of EP 2 365 307 A1 is not feasible for this type of chambers. It is not possible to simply reduce the physical dimensions of the integrating sphere: The calibration requires a diameter of the emitting surface of at least several mm, but the working principle of an integrating sphere limits all openings of the sphere to approximately 5% of the total surface of the sphere.

It is an object of the present invention to provide a method for calibrating a pyrometer by means of a cold source which is also applicable to processing chambers with a narrow slit. It is another object of the present invention to provide a method for determining the temperature of a semiconducting wafer and a system for determining the temperature of a semiconducting wafer which comprise a more accurate, more reliable and more cost-effective calibration process.

### SUMMARY OF THE INVENTION

According to an aspect of the present invention, a flat light emitting plate for simulating thermal radiation is provided. The light emitting plate comprises a main body made of a transparent material, a light emission area located on an upper surface of the light emitting plate for emitting light, at least one light source located on a lateral surface of the light emitting plate, at least one detector located on a lateral surface of the light emitting plate, and a regulating circuit for adjusting the intensity of light emitted by the light sources. The at least one light source irradiates light towards the main body and the at least one detector receives light from the main body.

The light emitting plate may comprise a reflective coating covering the main body. Preferably, the reflective coating comprises at least one first opening in correspondence of the at least one detector, at least one second opening in correspondence of the at least one light source. Preferably, the reflective coating completely covers the surface of the main body except for the light emission area and the first and second openings. The material used for the reflective coating may be any suitable metal, for instance the material used for the reflective coating may be aluminium with a protective coating. Also silver and gold may be used for the reflective coating, which are particularly advantageous when working in the infrared region.

Preferably, the light emitting plate is made of a transparent material. Preferably, the transparent material comprises sapphire, quartz glass or plastic (e.g. PMMA).

Preferably, a portion of the light emitting plate including at least the light emitting area has a rough surface or a textured surface having predetermined scattering properties. A lower portion of the light emitting plate may also have a rough or textured surface.

The rough or textured surface may be realized by etching (in case of sapphire and quartz glass) or by nano-indentation (in case of plastic material).

Preferably, the light emitting plate comprises a built-in stabiliser. Preferably, the built-in stabiliser includes the at least one detector and the regulating circuit. Preferably, the at least one detector and the regulating circuit are located on a carrier material. Alternatively, the at least one detector and the regulating circuit may be integrated in a silicon wafer used as carrier material for the light emitting plate.

Preferably, the thickness of the light emitting plate ranges between 2mm and 5mm. More preferably, it ranges between 2mm and 3mm.

Preferably, the light is irradiated into the light emitting plate by means of a plurality of light sources periodically arranged along the side portion of the light emitting plate. Preferably, the number of light sources is between 3 and 30. Preferably, the number of detectors is between 1 and 30. The number of detectors may be smaller than the number of light sources. Preferably, the light sources are light emitting diodes (LEDs). The light emitting plate may have different forms, e.g. a circular form, a longish form, or a rectangular form. Preferably, the light emitting plate has the form of a disc. Preferably, the diameter of the light emitting plate ranges between 50mm and 110mm.

According to another aspect of the present invention, a calibration susceptor to be used in the production of semiconducting wafers is provided. The calibration susceptor comprises a susceptor substrate having a plurality of pockets and at least one light emitting plate accommodated in said pockets of the susceptor substrate. The calibration susceptor is adapted to be introduced into a processing chamber for the production semiconducting wafers by means of a robot loader.

Preferably, the calibration susceptor substrate has a thickness ranging between 1 cm and 2cm.

Preferably, the calibration susceptor comprises a first light emitting plate emitting light at a first wavelength and a second light emitting plate emitting light at a second wavelength different from the first wavelength.

Preferably, the first and second light emitting plates have an elongated rectangular shape and are arranged on the susceptor carrier so to cover all radial positions.

Alternatively, each of the first and second light emitting plates may comprise a plurality of light emitting plates having a circular shape. In this case, the light emitting plates may be arranged along the ring radii where the wafers are placed on the growth susceptor.

According to an aspect of the present invention, a method for calibrating a pyrometer using the flat light emitting plate is provided, the pyrometer being adapted to intercept and measure thermal radiation of a semiconducting wafer which is located within a processing chamber, wherein the pyrometer is located outside the processing chamber and the thermal radiation is received by the pyrometer after passing through a window of the processing chamber. The calibration method comprises the following steps: a flat light emitting plate or a calibration susceptor including a light emitting plate is provided inside the processing chamber, so that the light emitting area of the light emitting plate faces the window of the processing chamber, the light emitting plate is irradiated by the at least one light source through the at least one first opening in a side portion of the light emitting plate, wherein the spectrum of the light emitted by the light sources corresponds to a predetermined radiation temperature, and wherein the radiation which is irradiated from the light emitting plate is detected by the at least one detector and adjusted by the regulating circuit. The pyrometer measures a thermal radiation signal from the light emitting plate, a virtual temperature of the light emitting plate is determined from the measured thermal radiation signal of the light emitting plate, and the pyrometer is calibrated by assigning the predetermined radiation temperature of the light emitting plate with the thermal radiation signal measured by the pyrometer.

The light emitting plate is preferably located in the same position as the semiconducting wafer which is to be processed afterwards.

The virtual temperature of the light emitting plate indicates the temperature that a semiconducting wafer would have, which irradiates the thermal radiation emitted by the light emitting plate. Preferably, the spectrum of the light emitted by the light sources corresponds to a wavelength detection characteristic of the pyrometer, i.e. the central wavelength and band-width for which the detection of the pyrometer is sensitive and pre-calibrated to.

Preferably, the light emitting plate and the processing chamber are not heated during the calibration process. Only due to the emission out of light emitting plate, within the spectral range of the pyrometer the light emitting plate is identical with a "hot" wafer in terms of thermal radiation. That is, the light emitting plate simulates a semiconducting wafer of a predetermined (known) temperature in terms of thermal radiation within a small spectral range. The radiation density is preferably adjusted by comparison with a calibration radiation source to the radiation density of a predetermined temperature according to the Planck function. The light emitting plate preferably comprises at least one detector which measures the radiation density inside the light emitting plate and a regulating circuit which is adapted to control the radiation density of the light source which illuminates the light emitting plate, such that the radiation density inside the light emitting plate is stabilised according to the predetermined radiation temperature.

Preferably the light emitting plate is controlled to emit thermal radiation according to a plurality of predetermined temperature values and the pyrometer is calibrated by assigning the plurality of measured thermal radiation signals with a plurality of predetermined temperature values. In case more than one determined temperature value is assigned, the plurality of temperature values are verified by comparing the pairs of temperature values/thermal radiation signals according to the Planck function and judging whether all pairs of temperature values/ thermal radiation signals comply with the Planck function. The light emitting plate is preferably controlled to emit thermal radiation according to a temperature range of 100 °C - 1400 °C, more preferably 500 °C - 1200 °C and still more preferably 600 °C - 900 °C.

### BRIEF DESCRIPTION OF THE DRAWINGS

The accompanying drawings, together with the specification, illustrate exemplary embodiments of the present invention, and, together with the description, serve to explain the principles of the present invention.
- FIG. 1: shows an apparatus for calibration of a pyrometer by means of an integrating sphere according to the prior art,
- FIG. 2: shows a top view of a light emitting plate according to an embodiment of the invention,
- FIG. 3: shows a lateral section view of the light emitting plate of Fig. 2 taken along line A-A',
- FIG. 4: shows an apparatus for the calibration of a pyrometer according to an embodiment of the invention,
- FIG. 5: shows a top view of a calibration susceptor accommodating two rectangular light emitting plates according to another embodiment of the invention, and
- FIG. 6: shows a top view of a calibration susceptor accommodating a plurality of light emitting plates according to yet another embodiment of the invention.

### DETAILED DESCRIPTION OF THE DRAWINGS

In the following detailed description, only certain exemplary embodiments of the present invention are shown and described, by way of illustration. As those skilled in the art would recognize, the invention may be embodied in many different forms and should not be construed as being limited to the embodiments set forth herein.

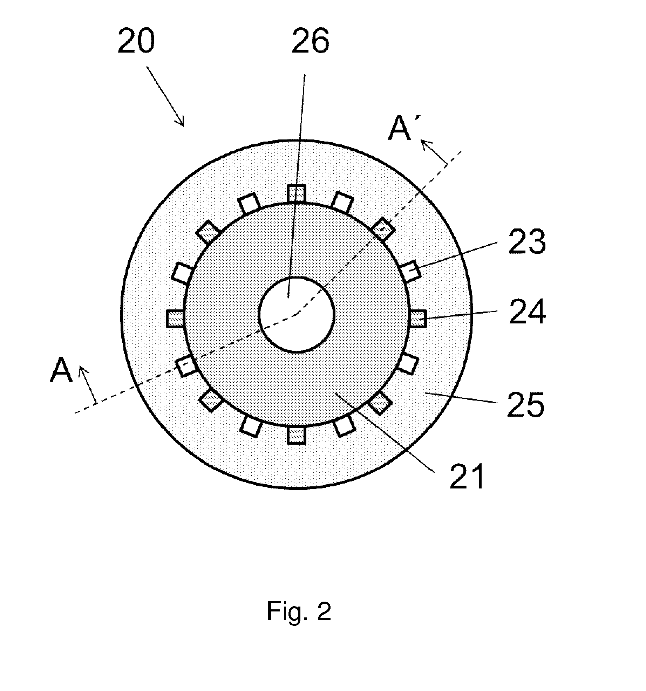

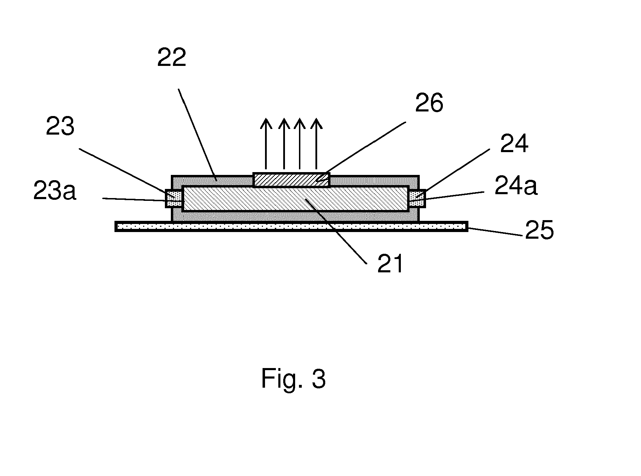

Fig. 2 shows a top view of a light emitting plate 20 for simulating thermal radiation and Fig. 3 shows a lateral section view of the light emitting plate of Fig. 2 taken along line A-A'. The light emitting plate 20 comprises a main body 21 which may be a transparent plate made of a transparent material such as sapphire, quartz glass, plastic, or the like. The light emitting plate 20 comprises at least one light emitting area 26 on an upper surface of the light emitting plate having good scattering properties, i.e. predetermined scattering properties. The main body 21 and the light emitting area 26 may have a rough surface or a textured surface to improve the scattering characteristics. The scattering properties of the main body 21 and the light emitting area 26 should be such that, in the range of the acceptance angle of the pyrometer, the intensity distribution of the emitted light may be approximately described by the Lambert's emission law, that is, the light emitting area preferably exhibits scattering characteristics that correspond as much as possible to the Lambertian reflectance.

The light emitting plate 20 may have different forms, such as a circular form or a longish rectangular form.

In the preferred embodiment of Fig. 2 the light emitting plate 20 and the light emitting area 26 may have a circular shape. The surface roughness or texture of the main body 21 and the light emitting area 26 increases efficiency and homogeneity of light radiation emitted by the light emitting plate 20.

The main body 21 may be completely coated with a reflective layer 22 except on the light emitting area 26 and on first openings 23a and second openings 24a. The reflective layer may be formed of any suitable metal, e.g. by aluminium with a protective coating, gold or silver.

First and second openings 23a, 24a are arranged along a lateral portion of the light emitting plate. Detectors 23 and light sources 24 are arranged along the lateral portion of the light emitting plate 20 in correspondence to the first and second openings 23a, 24a, respectively, so that light from the light sources 24 can be emitted inside the main body 21 through the second openings 24a and the detectors 23 can receive light from the first openings 23a, respectively. In a preferred embodiment, the light sources 24 are light emitting diodes (LEDs).

Since the light is emitted laterally into the light emission plate 20 and is repeatedly scattered at the rough or textured surface and - when a reflective coating 22 is present - also internally reflected by the reflective coating 22 before it is emitted through the light emitting area 26, homogeneous light with uniform luminosity can be produced.

The intensity of the light emitted by the light emitting plate 20 can be regulated by a regulating circuit (not shown) adapted to regulate the light emitted by the LEDs 24. The light emitting plate comprises a built-in stabiliser including the detectors 23 and the regulating circuit. The detectors 23 and the regulating circuit may be arranged on a carrier material 25, such as a printed circuit board (PCB). Batteries for the light emitting plate may also be integrated in the carrier material 25. Alternatively, the stabiliser may be integrated in a silicon wafer which in its central portion is used as carrier material 25 for the light emitting plate 20.

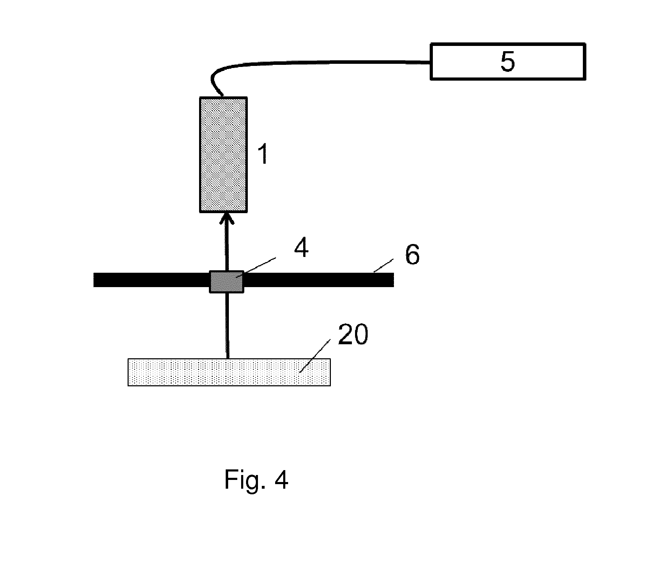

Fig. 4 shows an apparatus for the calibration of a pyrometer according to a first embodiment of the present invention and illustrates the related method for the calibration of the pyrometer. The apparatus for calibration comprises a sensing head 1 including a pyrometer which needs to be calibrated, i.e. at least one thermal radiation signal measured by said pyrometer has to be assigned to a known temperature value. The sensing head 1 is located outside a processing chamber 6 used for the production of semiconducting wafers.

The apparatus further comprises a light source and an optical detector (not separately shown, i.e. said light source and optical detector may be included in the sensing head 1, the sensing head 1 also comprising the pyrometer). However, it is alternatively possible that the pyrometer and the light source are separately arranged outside the processing chamber 6. The pyrometer is located in such a manner to receive a thermal radiation signal from a semiconducting wafer (not shown) to be processed inside the processing chamber 6 through a window 4 in the processing chamber 6.

During the calibration of the pyrometer, the semiconducting wafer is replaced by a light emitting plate 20 as the one shown in Figs. 2 and 3. The light emitting plate 20 is inserted inside the processing chamber 6 so that the light emitting area 26 of the light emitting plate 20 is facing the window 4 of the processing chamber 6 and the light emitted by the light emitting plate 20 passes through the window 4 of the processing chamber to reach the pyrometer 1.

The light sources 24 irradiate light in the light emitting plate 20, which is repeatedly scattered at the rough or textured surface and optionally internally reflected by the reflective coating 22 before it is emitted through the light emitting area 26. The light emitted by the light emitting plate 20 is detected by the detectors 23 arranged on the lateral surface of the light emitting plate 20 and regulated by the regulating circuit so to correspond to a predetermined radiation temperature, i.e. to the thermal radiation emitted by a semiconducting wafer having said predetermined temperature value. The detectors 23 of the light emitting plate 20 may include optical filters that match the spectral characteristics of the sensor inside the pyrometer 1. Furthermore, the wavelength of the radiation emitted by the light emitting plate 20 is the same as the detection wavelength of the pyrometer 1, i.e. the wavelength (characterized by central wavelength and band-width) for which the detection of the pyrometer is sensitive and pre-calibrated to.

The radiation density may (initially) vary for example due to drifts of the supply voltage or the influence of ambient temperature on the light sources. However, in case the radiation density inside the light emitting plate is stabilised according to a predetermined temperature, such variations are compensated. Due to the above, the light emitting area of the light emitting plate becomes a "cold" (i.e. not necessarily heated) homogenous radiating surface which simulates a "hot" homogeneous (thermally) radiating (or susceptor radiation through-passing) semiconductor wafer inside the processing chamber. Therefore the pyrometer can be calibrated using the predefined thermal radiation (corresponding to a predefined temperature of the wafer) by assigning the predefined thermal radiation with a predefined temperature. Later temperature measurements of the semiconducting wafer during the manufacturing process of the wafer may be accurately carried out by measuring the thermal radiation of the semiconducting wafer by the pyrometer and re-assigning the measured thermal radiation signal with a temperature that is derived from the Planck function and the assigned value(s).

Accordingly, the light emitting plate 20 is not heated during the calibration process but it simulates a hot radiating wafer or a hot transparent (through-passing) wafer on a radiating susceptor/wafer-carrier in terms of thermal radiation, similar to the integrating sphere 8 of the prior art.

However the light emitting plate 20 has a typical thickness of 2mm to 5mm, that is, it is much thinner than an integrating sphere, and is therefore suitable to be used in processing chambers 6 having a narrow opening.

In a first embodiment, the light emitting plate is arranged on a standard susceptor carrier 25, so that the overall thickness of light emitting plate 20 and susceptor 25 has to be small enough to allow inserting the susceptor 25 together with the light emitting plate 20 through the lateral slit of the processing chamber 6.

Since the slit has a typical width between 15mm and 25mm, the susceptor 25 has a typical width of 10mm to 20mm, and a predetermined gap between susceptor and the borders of the slit is required, it follows that the thickness of the light emitting plate 20 may range between 2mm and 5mm. Preferably, the thickness of the light emitting plate 20 should not exceed 3mm.

Said requirements represent a quite narrow restriction for the manufacturing of the light emitting plate 20 of the present invention.

In a further embodiment of the present invention, a calibration susceptor carrier especially manufactured for calibration purposes is provided, which comprises pockets adapted to accommodate one or more light emitting plates 20.

The calibration susceptor may have the same size and shape of standard carriers used for the wafers, so that it can be handled by the same robot loader used to introduce the wafer carriers into the chamber. However the material may be different from the materials used for conventional carriers, which are usually made of coated graphite, and may comprise aluminium or other suitable materials.

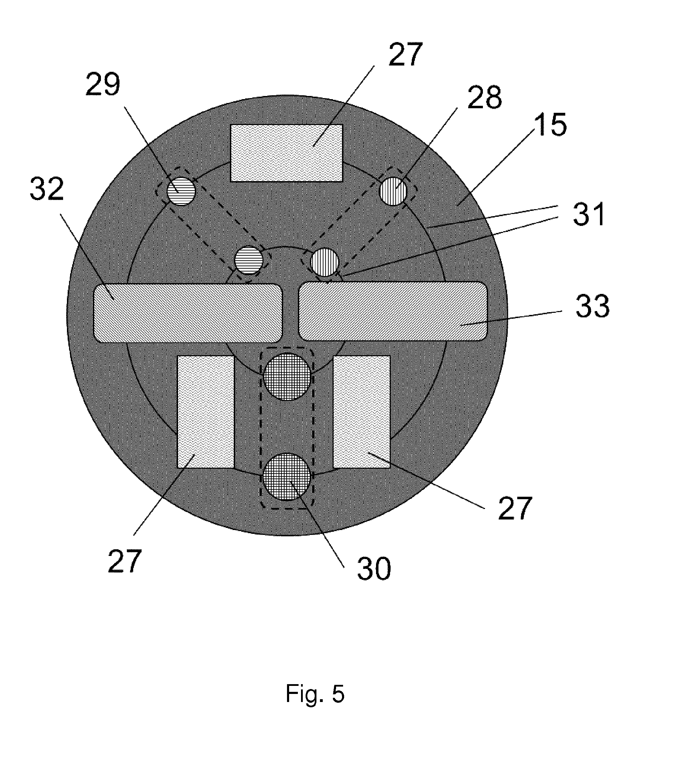

Fig. 5 shows a top view of a calibration susceptor 15 accommodating two rectangular light emitting plates according to an embodiment of the present invention. In this embodiment, two light emitting plates 32 and 33 are provided. The two light emitting plates 32 and 33 may emit light at two different wavelengths to calibrate the pyrometer. In general, the wavelength of the light emitting plate should be adapted to the semiconducting material for which the surface temperature has to be measured. For instance, a first wavelength may be about 950mm, which is not adapted for measuring the temperature of a substrate comprising GaN, which is transparent for the first wavelength. In this case, a second wavelength of about 400mm is more convenient. The present configuration with two wavelengths has the advantage that it can be used to calibrate different pyrometers in parallel.

The light emitting plates 32 and 33 have preferably an elongated rectangular shape, so that they may cover all possible positions of the wafers along the radius of the susceptor 15. Furthermore, the elongated shape allows calibrating pyrometers that are installed at a slit-like viewport allowing a large range of possible radial positions. In this case the light sources and detectors of the light emitting plate are alternately arranged along the longer sides of the rectangular, in such a manner that a light source located on a first one of the long sides faces a detector located on the second one of the long sides, opposite to the first one.

The calibration susceptor 15 may also comprise one or more batteries 27 and further calibration samples, such as convex and concave curvature calibration standards 28 and 29 and/or a set of reflectance calibration samples 30.

The convex and concave curvature calibration standards 28 and 29 may be made of glass or other suitable hard material and have a very accurate, spherical surface of known curvature radius. They are used to calibrate in-situ wafer curvature measurement systems, which are often used in conjunction with in-situ pyrometers.

The reflectance calibration samples 30 may comprise substrate wafers of known reflectance, such as silicon or sapphire. They are used to calibrate the reflectance measurement of the pyrometer, which is required for emissivity correction algorithms. The reflectance calibration samples 30 may also be used for the calibration of in-situ reflectance measurement systems operating at wavelengths other than the pyrometric wavelength.

According to this embodiment, all calibration substrates including the light emitting plates 32 and 33 are accommodated in pockets of the calibration susceptor 15, while the power supply and the regulating circuit of the light emitting plates may be implemented separately, i.e. not integrated in the light emitting plates 32 and 33 but accommodated beside the light emitting plates 32 and 33, so that the thickness of the light emitting plates 32 and 33 may extend up to 2 cm, i.e. nearly up to the entire thickness of the calibration susceptor 15, wherein the difference between the thickness of the calibration susceptor 15 and the depth of the pockets in the calibration susceptor has to be at least 1 mm. This provides a great advantage in the manufacturing of the light emitting plates.

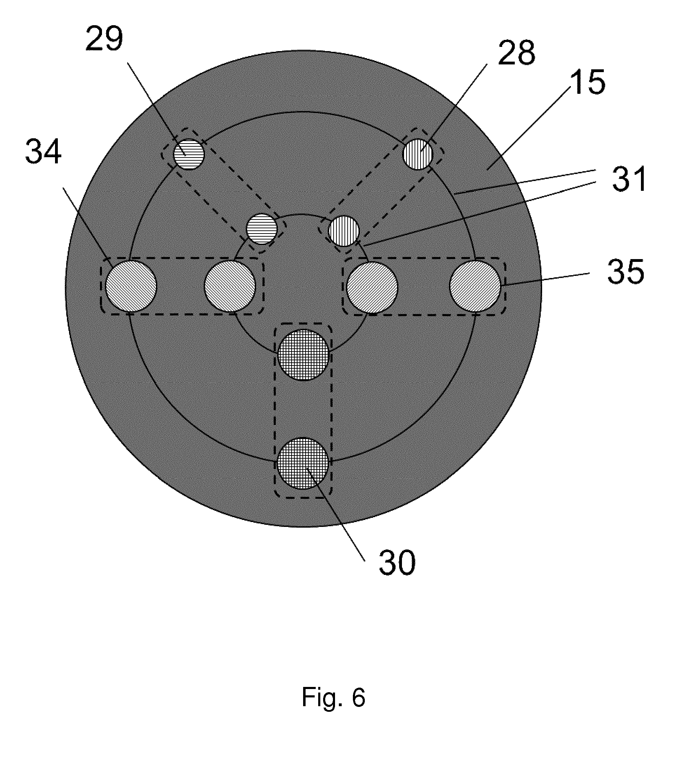

Fig. 6 shows a top view of a calibration susceptor accommodating a plurality of light emitting plates according to another embodiment of the invention. In this embodiment two sets of light emitting plates 34 and 35 are used which emit light at two different wavelengths. Each of the two sets of light emitting plates 34 and 35 comprises a plurality of circular light emitting plates located at the ring radii 31 corresponding to the radii where wafers are placed on the growth susceptor. The number of light emitting plates in each of the two sets 34 and 35 preferably corresponds to the number of wafer rings used on the growth susceptor. Alternatively, it is possible to use only one light emitting plate per wavelength and to repeat the calibration for each ring of wafers, while changing the position of the light emitting plate between calibration steps.

The use of a special calibration susceptor allows a thicker design of the light emitting plates 32, 33, 34 and 35 in comparison to the light emitting plate 20, because the recess in the calibration susceptor can be deeper than in standard growth susceptors. This allows the battery to be placed under the transparent light emitting material.

In comparison to Fig. 5, the embodiment in Fig. 6 is a modular system where the light emitting plates can be exchanged if a new pyrometer with new properties (e.g. wavelength) is installed.

While the present invention has been described in connection with certain exemplary embodiments, it is to be understood that the invention is not limited to the disclosed embodiments, but, on the contrary, is intended to cover various modifications and equivalent arrangements within the scope of the appended claims, and equivalents thereof.

### List of reference signs

| | |
|---|---|
| 1 | sensing head / pyrometer |
| 4 | window of the processing chamber |
| 5 | data processing unit |
| 6 | processing chamber |
| 8 | integrating sphere |
| 9 | detector of integrating sphere |
| 10 | window plate in integrating sphere |
| 11 | light source/LED of integrating sphere |
| 15 | calibration susceptor |
| 20 | light emitting plate |
| 21 | main body of the light emitting plate |
| 22 | reflective coating |
| 23 | detector of the light emitting plate |
| 23a | first opening |
| 24 | light source/LED of light emitting plate |
| 24a | second opening |
| 25 | carrier material/susceptor |
| 26 | light emitting area |
| 27 | battery |
| 28 | set of convex curvature calibration standards |
| 29 | set of concave curvature calibration standards |
| 30 | set of reflectance calibration samples |
| 31 | ring radius |
| 32 | light emitting area for pyrometric wavelength 1 |
| 33 | light emitting area for pyrometric wavelength 2 |
| 34 | set of light emitting plates for pyrometric wavelength 1 |
| 35 | set of light emitting plates for pyrometric wavelength 2 |

## Claims

1. A flat light emitting plate (20) for simulating thermal radiation, the light emitting plate (20) comprising:
a. a main body (21) made of a transparent material;
b. a light emission area (26) located on an upper surface of the light emitting plate (20) for emitting light;
c. at least one light source (24) located on a lateral surface of the light emitting plate (20) for irradiating light towards the main body (21);
d. at least one detector (23) located on a lateral surface of the light emitting plate (20) for receiving light from the main body (21); and
e. a regulating circuit for adjusting the intensity of light emitted by the light sources (24).

2. The light emitting plate according to claim 1, further comprising a reflective coating (22) covering the main body (21),
wherein the reflective coating (22) comprises at least one first opening (23a) in correspondence of the at least one detector (23) and at least one second opening (24a) in correspondence of the at least one light source (24), and
wherein the reflective coating (22) completely covers the surface of the main body (21) except for the light emission area (26) and the first and second openings (23a, 24a).

3. The light emitting plate according to one of the preceding claims,
wherein the main body (21) is made of sapphire, quartz glass or plastic.

4. The light emitting plate according to one of the preceding claims,
wherein a portion of the light emitting plate (20) including at least the light emission area (26) has a rough surface or a textured surface having predetermined scattering properties.

5. The light emitting plate according to one of the preceding claims,
wherein the thickness of the light emitting plate (20) ranges between 2mm and 5mm.

6. The light emitting plate according to one of the preceding claims,
wherein the light emitting plate (20) has the shape of a disc and
wherein the light emitting plate (20) comprises a plurality of light sources (24) and a plurality of detectors (23) alternately arranged at regular intervals along the lateral surface of the light emitting plate (20).

7. The light emitting plate according to claim 6,
wherein the number of light sources (24) ranges between 3 and 30.

8. A calibration susceptor to be used for calibration purposes in the production of semiconducting wafers, the calibration susceptor comprising:
- a susceptor substrate (15) comprising a plurality of pockets;
- one or more light emitting plates (32, 33, 34, 35) according to one of the preceding claims accommodated in corresponding pockets of the susceptor substrate (15);
wherein the calibration susceptor is adapted to be introduced into a processing chamber (6) for the production of semiconducting wafers by means of a robot loader.

9. The calibration susceptor of claim 8, comprising a first light emitting plate (32, 34) emitting light at a first wavelength and a second light emitting plate (33, 35) emitting light at a second wavelength different from the first wavelength.

10. The calibration susceptor of one of claims 8 and 9, wherein the first and second light emitting plates (32, 33) comprise a light emitting plate having an elongated rectangular shape and arranged on the susceptor carrier so to cover all radial positions.

11. The calibration susceptor of one of claims 8 to 10, wherein each of the first and second light emitting plates (34, 35) comprises a plurality of light emitting plates having a circular shape.

12. Method for calibrating a pyrometer (1) adapted to intercept and measure thermal radiation of a semiconducting wafer which is located within a processing chamber (6), wherein the pyrometer (1) is located outside the processing chamber (6) and the thermal radiation is received by the pyrometer (1) after passing through a window (4) of the processing chamber (6), the method comprising the following steps:
- providing a flat light emitting plate (20) according to one of claims 1 through 7 or a calibration susceptor according to one of claims 8 through 11 inside the processing chamber (6),
- irradiating the light emitting plate (20) with the at least one light source (24), wherein the spectrum of the light emitted by the light source (24) corresponds to a predetermined radiation temperature, and wherein the radiation which is irradiated from the light emitting plate (20) is detected by the at least one detector (23) and adjusted by the regulating circuit for regulating the light emitted by the light source (24),
- measuring, by the pyrometer (1), a thermal radiation signal from the light emitting plate (20),
- determining a virtual temperature of the light emitting plate (20) from the measured thermal radiation signal of the light emitting plate (20), and
- calibrating the pyrometer (1) by assigning the predetermined radiation temperature of the light emitting plate (20) with the thermal radiation signal measured by the pyrometer (1).

13. The method according to claim 12,
wherein the spectrum of the light emitted by the at least one light source (24) corresponds to a wavelength detection characteristics of the pyrometer (1).

14. Method for determining the temperature of a semiconducting wafer which is located within a processing chamber (6) by using a pyrometer (1), wherein the pyrometer (1) is located outside the processing chamber (6) and the thermal radiation is received by the pyrometer (1) after passing through a window (4) of the processing chamber (6), the method comprising:
- calibrating the pyrometer (1) according to the method of one of claims 15 and 16,
- measuring a thermal radiation which is emitted by the semiconducting wafer due to its temperature by using the pyrometer (1), and
- determining the temperature of the semiconducting wafer from the measured thermal radiation.
